# EUROPEAN PATENT APPLICATION

(11) **EP 4 287 473 A1**
(43) Date of publication of application: **06.12.2023**
(21) Application number: 22744949.3
(22) Date of filing: 31.01.2022
(51) Int. Cl.: H02K 21/12, H02K 21/24

(54) **STATOR FOR AXIAL-FLUX ELECTRIC MACHINE**

(30) Priority: 01.02.2021 US 202163144223 P
(71) Applicant: Weg Equipamentos Elétricos S.A., 3300 Jaraguá do Sul, SC (BR)
(72) Inventor: AGUIAR, Rodrigo Souza, Jaraguá do Sul (BR); STOINSKI, Valmir Luis, Jaraguá do Sul (BR)
(74) Representative: Cabinet Beaumont
(86) International application number: PCT/BR2022/050031
(87) International publication number: WO 2022/160028

(57) **Abstract**

The present invention relates to a stator of an axial flux electric machine (1) comprising a casing (2) and an active core including a plurality of wound cores (9) arranged in a support disk (11), the support disk (11) comprising a plurality of peripheral notches (14) spaced apart along an outer periphery of the disk (11), with each peripheral notch (14) having an engagement portion (17) formed on the open end (15) thereof and designed to cooperate with a corresponding engagement portion (18) formed in the inner surface of the casing (2).

## Description

### FIELD OF THE INVENTION

The present invention relates to an axial flux electric machine, and more specifically to an axial flux motor or generator.

### BACKGROUND OF THE INVENTION

Axial flux electric machines are widely known in the art, and basically comprise at least one stator and at least one disk-shaped rotor with permanent magnets wherein the flux travels in the axial direction of the rotating shaft of the machine. They can comprise both electric motors and electric generators.

Some axial flux machines are constructed with a central disk that supports the wound stator poles. This central disk, however, must have its design developed so as not to have mechanical or thermal properties that negatively impact the operation of the machine.

EP 2869433 A1 shows one such prior art machine, wherein a support disk receives a series of radially and equidistantly mounted coils.

A similar solution is disclosed in WO202158052, which machine has a central support flange that divides the stator into two stator halves, wherein each stator half has wound cores.

### OJECTIVES OF THE INVENTION

It is one of the objectives of the present invention to provide an axial flux electric machine with optimized assembly.

It is another of the objectives of the present invention to provide an axial flux electric machine with an optimized design support disk, which allows the transmission of torque to the casing.

It is yet another of the objects of the present invention to provide an axial flux electric machine with a support disk that enables the power cables of the machine to be securely held within it.

It is yet another object of the present invention to provide an axial flux electric machine in which losses by currents induced in the motor components can be minimized.

It is yet another of the objectives of the present invention to provide a compact and high-power axial flux electric machine.

### SUMMARY OF THE INVENTION

The present invention relates to an axial flux electric machine comprising a casing and an active core comprising at least one rotor and at least one wound stator, wherein the wound stator comprises a plurality of wound cores arranged in a support disk.

The support disk comprises a flat plate having an inner edge and an outer edge, the flat plate having a central hole and a plurality of wound core positioning holes, each of the wound core positioning holes being configured to receive each of the plurality of wound cores.

The support disk further comprises a plurality of peripheral notches spaced apart along an outer periphery of the disk, each peripheral notch having an open outer end disposed at the outer edge of the disk, and a rounded closed inner end.

At least one peripheral notch of the plurality of peripheral notches has an engagement portion, formed on the open end, designed to cooperate with a corresponding engagement portion formed on the inner surface of the casing.

In one embodiment of the invention, the support disk may further comprise a plurality of docking holes for positioning and tying machine power cables along the periphery of the disk.

In one embodiment of the invention, the casing is formed by a body part, a front cover, and a rear cover, wherein the engagement portion is designed to cooperate with a corresponding engagement portion formed on the inner surface of the body part of the casing. In this embodiment, the support disk is positioned centrally with respect to the front and rear covers.

In an embodiment of the invention, the engagement portion is formed as two recesses, wherein each recess is formed on one side of the open end; and the corresponding engagement portion comprises a rectangular protrusion which side edges fit into the recesses.

The machine may further comprise at least one coolant fluid inlet hole and at least one coolant fluid outlet hole, the support disk can be positioned in correspondence with the at least one coolant fluid inlet and at least one coolant fluid outlet of the casing.

In an embodiment of the invention, each wound core of the plurality of wound cores is a two-sided wound core formed by joining two wound core parts, wherein one of the two core parts comprises a male connection and the other of the core parts comprises a female connection, and wherein each core part comprises at least one spacer element. Each of the core parts may further have, on at least one radial end, a recess that relies on a corresponding end edge of the positioning hole.

### BRIEF DESCRIPTION OF THE DRAWINGS

The present invention will be described below in more detail, with references to the accompanying drawings, in which:
Figure 1 - is a perspective view of an axial flux electric machine according to an embodiment of the present invention;
Figure 2 - is a perspective sectional view of the casing of an axial flux electric machine according to an embodiment of the present invention;
Figure 3 - is a perspective view of a stator component of an axial flux electric machine according to an embodiment of the present invention;
Figure 4 - is a perspective view of the assembly of a stator component of an axial flux electric machine according to an embodiment of the present invention, the resin being removed;
Figure 5 - is a top perspective view of an axial flux electric machine according to an embodiment of the present invention, the central part of the casing and the resin being removed;
Figure 6 - is a front view of a support disk of an axial flux electric machine according to an embodiment of the present invention;
Figure 7 - is an enlarged view of a portion of the support disk of an axial flux electric machine according to an embodiment of the present invention;
Figure 8 - is a sectional view of stator components of an axial flux electric machine according to an embodiment of the present invention, a central part of the machine casing further being shown; and
Figures 9a and 9b - are perspective views of two pairs of wound core components of an axial flux electric machine according to an embodiment of the present invention.

### DETAILED DESCRIPTION OF THE INVENTION

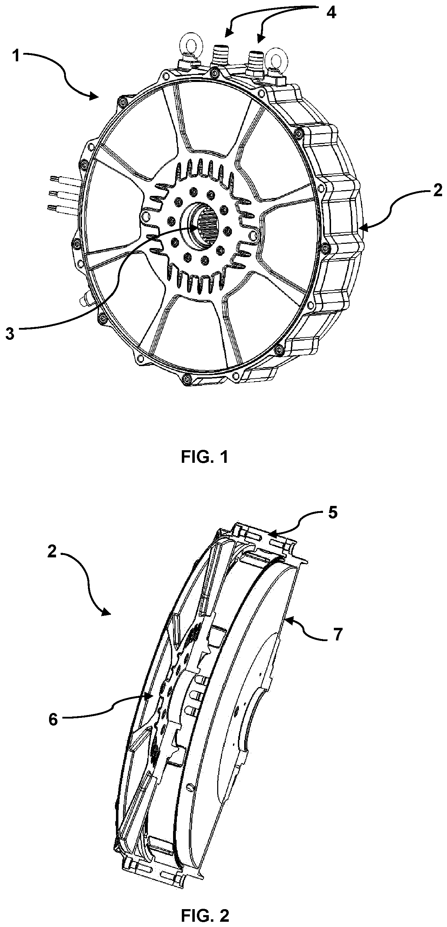

Figure 1 shows an axial flux motor according to an embodiment of the present invention.

Although the present invention is described incorporated in an electric motor, it should be understood that the solution of the present invention could be equally applied to other axial flux electric machines, such as, for example, axial flux generators.

As can be seen in Figure 1, the motor 1 comprises a casing 2 with a central through hole 3 and coolant fluid inlet and outlet holes 4. The through hole 3 is intended for receiving a shaft, however, it should be understood that in other embodiments of the invention the shaft could be integral to the motor.

As best illustrated in the sectional view of figure 2, in the embodiment of the invention shown in the figures, the casing 2 is formed by a body part 5, a front cover 6 and a rear cover 7. However, it should be understood that the casing could be formed differently, for example as a two-sided casing, with the two-sided body part, with each half integral to a respective closure cap.

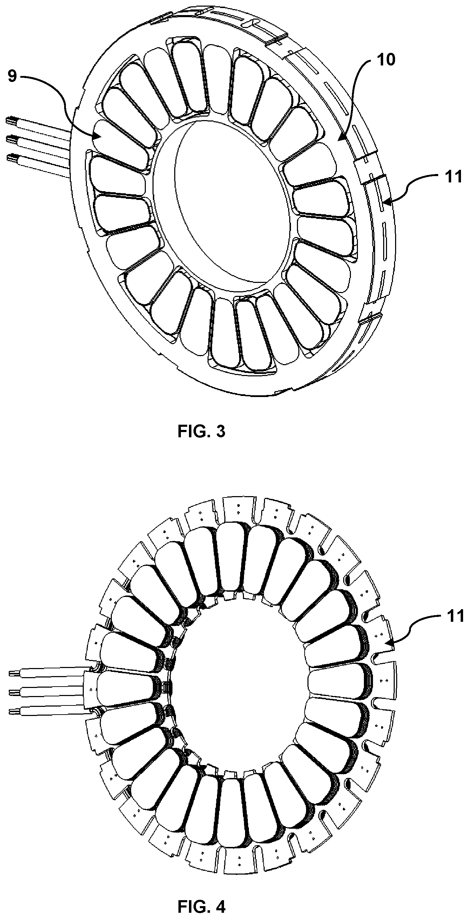

Figure 3 shows a perspective view of the motor wound stator according to an embodiment of the present invention. The figure shows a plurality of wound cores 9 surrounded by a resin 10. In one embodiment of the present invention, the resin is an epoxy resin with high thermal conductivity. However, one skilled in the art would understand that the present invention would achieve equivalent effect with a suitable thermosetting material.

The plurality of wound cores 9 are mounted on a support disk 11, best illustrated in figures 4 to 8. The support disk assists in positioning the magnetic core, keeping the plurality of wound cores correctly positioned during operation of the motor, and transmits torque to the motor casing. In one embodiment of the invention, the support disk 11 is a central support disk.

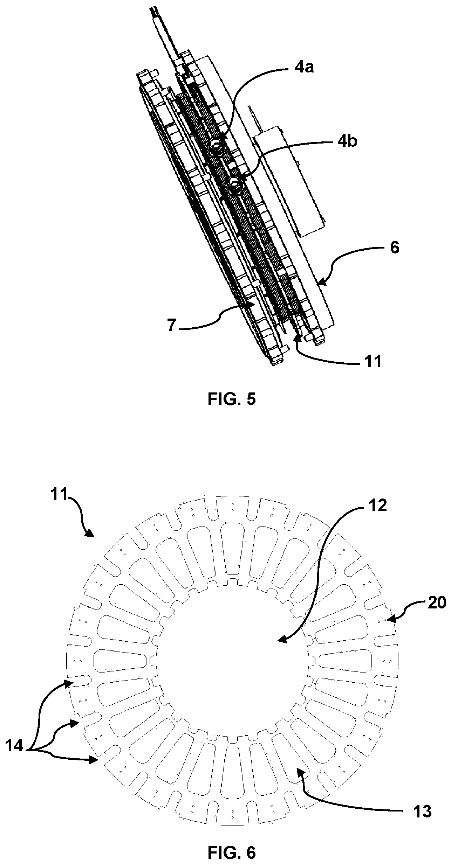

As best illustrated in figure 6, the disk 11 preferably comprises a circular plate with a central hole 12 and a plurality of positioning holes 13 of the magnetic core and coil assembly.

The disk 11 further comprises a plurality of peripheral notches 14, spaced apart along the outer periphery of the disk.

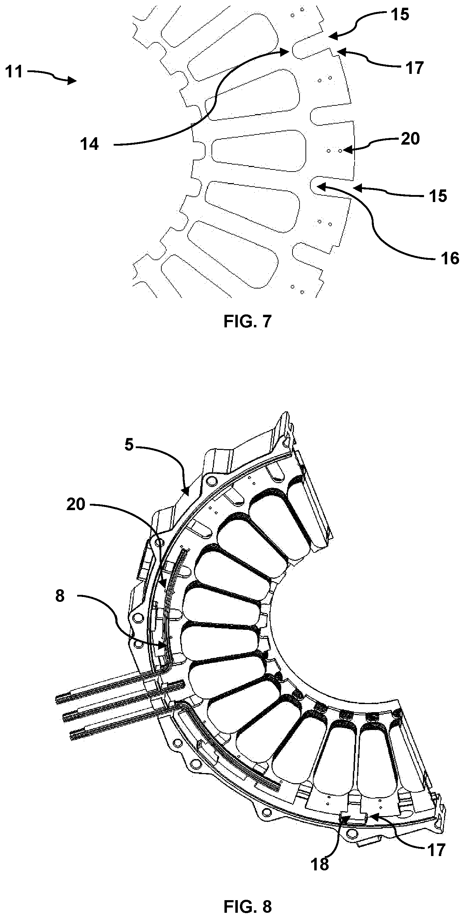

As best illustrated in figure 7, the peripheral notches 14 have an open outer end 15, at the edge of the disk 11, and a rounded closed inner end 16.

Furthermore, at least one peripheral notch 14 of the plurality of peripheral notches 14 further has an engagement portion 17 formed at the open end 15.

This engagement portion 17 is designed to cooperate with a corresponding engagement portion 18 formed on the inner surface of the body part 5 of the casing 2, as illustrated in figure 8. Of course, in the case of an embodiment of the invention in which the casing has a different shape, the corresponding engagement portion 18 could be formed in the corresponding region of the inner surface of that differently shaped casing.

In the preferred but non-limiting embodiment shown in the figures, the engagement portion 17 is formed as two corner recesses on each side of the open end 15. In this embodiment, the corresponding engagement portion 18 is a rectangular protrusion which side edges engage the corner recesses. In the exemplary embodiment illustrated in the figures, each corner recess 18 is a cutout with right angle to fit on the edge of the rectangular protrusion.

The fitting between the disk and the casing allows the transmission of torque to the motor casing. This feature facilitates the assembly of the motor and ensures its structural rigidity, and this fitting enables the transmission of torque.

Although the engagement portions 17 and 18 could be configured in other shapes, the embodiment in which the recesses are formed in the disk 11 is preferred as it reduces the amount of material used in the manufacture of the disk. In addition, the conformation of recesses in the disk 11 is easier to perform than in the casing 2, which would require complex machining.

The disk 11 of the present invention further comprises docking holes 20 for positioning and tying the cables 8 of the machine along the periphery of the disk (see figure 8) . Thus, for cabling anchorage, a string of high temperature resistant material is passed through the docking holes 20 and the cabling is tied in the central region between the holes 20. Of course, one skilled in the art would understand that the present invention would achieve equivalent anchoring effect with the use of other fastening elements, such as, for example, clamps.

The mooring of the cables 8 prevents them from being exposed outside the resin region, what increases the quality and efficiency of the assembly construction. In addition, the anchorage ensures the correct positioning of the cables during the stator encapsulation process.

It should be noted that the holes 20, when not used for cable mooring, allow the passage of the resin 10 during the manufacture of the motor, resulting in a more efficient encapsulation process.

In a preferred embodiment of the invention, the disk 11 is made of a low density electrically non-conducting material, such as for example resin fiber, capable of withstanding high temperatures, such as for example more than 200 °C without losing structural properties and dielectric strength. It should be understood, however, that the disk 11 could be manufactured in other suitable materials such as carbon fiber, BMC, or polyamide.

The support disk 11, in addition to ensuring the rigidity of the system, also assists in the cooling system of the motor according to the present invention.

As illustrated in figure 5, the support disk 11 is positioned in correspondence with the coolant fluid inlet and outlet 4a and 4b, in such a way that the coolant fluid that enters through the fluid inlet 4a is divided to the two sides of the disk 11, front and rear sides of the motor. In that sense, in the illustrated embodiment of the present invention, the disk 11 is positioned centrally with respect to the covers 6 and 7.

Thus, for cooling of the motor, a cooling fluid is pumped to the motor, entering through the inlet 4a, the fluid flows through cooling channels present in the resin 10. The heated fluid will exit the motor through outlet 4b, where it will need to pass through a heat exchanger to dissipate the heat that has been extracted from the motor into the environment.

For axial closure of the wound core and containment of the cooling fluid, closing plates may be used. The rotor (not illustrated and of construction and operation known to those skilled in the art) is mounted axially spaced apart from a corresponding plate of the closing plates. Thus, each rotor is mounted spaced apart from a respective closing plate.

In an embodiment of the present invention, the plurality of wound cores is mounted on the disk 11 so as to form a wound core split by the disk.

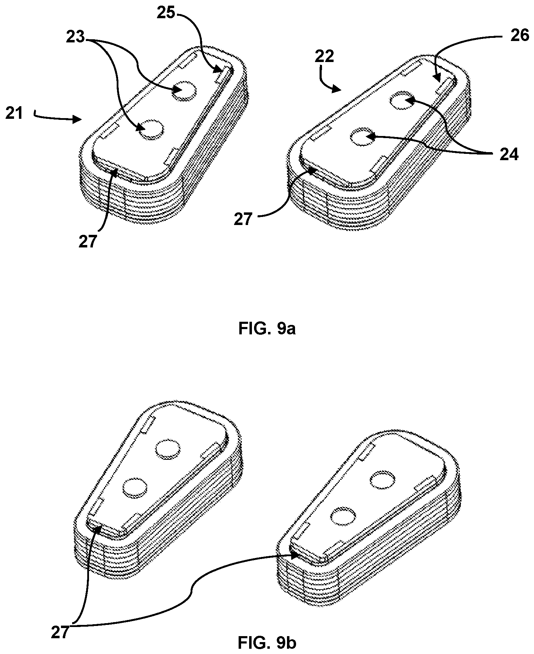

Thus, as best illustrated in figure 9a, in one embodiment of the present invention, each of the plurality of formed wound cores comprises two core parts 21, 22. One core part 21 comprises a male connection 23 and the other of the core parts 22 comprises a female connection 24. The fastening of the two core parts 21, 22 is done through the male and female connections and by an adhesive bonding, ensuring an improved connection.

Each of the core parts 21, 22 has, on at least one radial end, a recess 27 that ensures correct positioning of the core part on the disk 11. Thus, the recess 27 forms a fitting that relies on the edge of the corresponding end of the positioning hole 13.

In the embodiment shown in figure 9a, the recesses 27 are formed at the outer radial end of the core parts. In the embodiment shown in figure 9b, the recesses 27 are formed at the inner radial end of the core parts. In embodiments of the present invention, recesses 27 are formed at both the inner radial end and the outer radial end.

Further, each core part 21, 22 may comprise at least one spacer element 25, 26, which is responsible for providing an optimal spacing so that an optimal adhesive layer thickness joining the parts is achieved.

Having described examples of embodiments of the present invention, it should be understood that the scope of the present invention encompasses other possible variations of the inventive concept described, being limited only by the content of the claims only, including possible equivalents.

## Claims

1. An axial flux electric machine (1) comprising a casing (2) and an active core including at least one rotor and at least one wound stator, wherein the wound stator comprises a plurality of wound cores (9) arranged in a support disk (11), the support disk (11) comprising a flat plate having an inner edge and an outer edge, the flat plate having a central hole (12) and a plurality of wound core positioning holes (13), each of the wound core positioning holes (13) being configured to receive each of the plurality of wound cores (9), the machine being **characterized in that** the support disk (11) further comprises:
a plurality of peripheral notches (14) spaced apart along an outer periphery of the disk (11), each of the peripheral notches (14) having an open outer end (15) disposed at the outer edge of the disk (11) and a rounded closed inner end (16); and
wherein at least one peripheral notch of the plurality of peripheral notches (14) has an engagement portion (17), formed on the open end (15), designed to cooperate with a corresponding engagement portion (18) formed on the inner surface of the casing (2) .

2. The machine of claim 1, wherein the support disk (11) further comprises a plurality of docking holes (20) for positioning and tying connection cables (8) of the machine along the periphery of the disk (11).

3. The machine of claim 1, wherein the casing (2) is formed by a body part (5), a front cover (6) and a rear cover (7), wherein the engagement portion (17) is designed to cooperate with a corresponding engagement portion (18) formed on the inner surface of the body part (5) of the casing (2).

4. The machine of claim 3, wherein the support disk (11) is positioned centrally with respect to the front and rear covers (6, 7).

5. The machine of any one of claims 1 to 4, wherein:
the engagement portion (17) is formed as two recesses, wherein each recess is formed on one side of the open end (15); and
the corresponding engagement portion (18) comprises a rectangular protrusion which side edges fit into the recesses.

6. The machine according to any one of claims 1 to 5, comprising at least one coolant fluid inlet hole (4a) and at least one coolant fluid outlet hole (4b), and wherein the support disk (11) is positioned in correspondence with the at least one coolant fluid inlet and at least one coolant fluid outlet (4a and 4b) of the casing (2).

7. The machine according to any one of claims 1 to 6, wherein each wound core of the plurality of wound cores (9) is a two-sided wound core formed by joining two wound core parts (21, 22), wherein one of the two core parts (21) comprises a male connection (23) and the other of the core parts (22) comprises a female connection (24) and wherein each core part (21, 22) comprises at least one spacer element (25, 26).

8. The machine of claim 7, wherein each of the wound core parts (21, 22) has, on at least one of its radial ends, a recess (27) that relies on a corresponding end edge of the positioning hole (13) of the support disk (11).
